(19) Europäisches Patentamt
European Patent Office
Office européen des brevets

(11) EP 2 679 410 B1

## (12) EUROPEAN PATENT SPECIFICATION

(45) Date of publication and mention
of the grant of the patent:
**29.03.2017 Bulletin 2017/13**

(21) Application number: **12750073.4**

(22) Date of filing: **13.02.2012**

(51) Int Cl.:
*B60C 1/00* *(2006.01)*     *B60C 19/00* *(2006.01)*
*B29D 30/58* *(2006.01)*

(86) International application number:
**PCT/JP2012/053268**

(87) International publication number:
**WO 2012/114920 (30.08.2012 Gazette 2012/35)**

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.02.2011 JP 2011036479**

(43) Date of publication of application:
**01.01.2014 Bulletin 2014/01**

(73) Proprietor: **Bridgestone Corporation
Tokyo 104-8340 (JP)**

(72) Inventor: **YANAI, Kenjiro**
**Kodaira-shi**
**Tokyo 187-8531 (JP)**

(74) Representative: **Oxley, Robin John George et al
Marks & Clerk LLP
90 Long Acre
London WC2E 9RA (GB)**

(56) References cited:
**WO-A2-2010/122396     JP-A- 4 216 035
JP-A- 11 020 419     JP-A- 2004 268 578**

**Description**

TECHNICAL FIELD

The present invention relates to a tire in which both low rolling resistance and durability are compatible with each other.

BACKGROUND ART

In view of the fact that when heat generation properties of the whole tire are lowered to reduce rolling resistance of the tire, fuel consumption is enhanced, it is required to lower the rolling resistance of the tire. In order to lower this rolling resistance of the tire, it is performed to improve chiefly a compound of a tread rubber composition (PTL 1). In addition, in order to achieve low rolling resistance, it is performed to reduce the weight of a tire casing that is a constituent member of a tire exclusive of a tread by reducing the layer number of belts (PTL 2), replacing an inner liner rubber by a film (PTL 3), or the like.

However, the reduction of rolling resistance and the tire durability are in a relation of antinomy, and therefore, it is difficult to reduce the rolling resistance of tire while keeping the durability of tire. WO2010122396 discloses a rubber composition for tires for heavy duty vehicles.

CITATION LIST

PATENT LITERATURE

PTL 1: WO2010041528
PTL 2: JP-A-2006-117099
PTL 3: JP-A-2007-276581

SUMMARY OF INVENTION

TECHNICAL PROBLEM

Under such circumstances, an object of the present invention is to provide a tire in which both low rolling resistance and durability are compatible with each other.

SOLUTION TO PROBLEM

In order to solve the foregoing problem, the present inventor has found that the problem of the present invention can be solved by regulating a rolling resistance coefficient of a tire casing so as not to exceed 4.0, leading to accomplishment of the present invention.

Specifically, the present invention provides the following.

[1] A tire comprising a tire casing having a rolling resistance coefficient according to the coastdown method of JIS D4234 of not exceeding 4.0, wherein the tire casing comprises a base tread and a belt wedge rubber,

wherein the base tread is constituted by a rubber composition which comprises a rubber component comprising a natural rubber in an amount of 60 % by mass or more, carbon black having a nitrogen adsorption specific surface area as defined in JIS K6217-2:2001 of from 35 to 45 $m^2$/g in an amount of from 25 to 45 parts by mass based on 100 parts by mass of the rubber component and sulfur in an amount of from 1.0 to 7.0 parts by mass based on 100 parts by mass of the rubber component,

wherein the belt wedge rubber is constituted by a rubber composition which comprises a rubber component comprising a natural rubber in an amount of 60 % by mass or more, carbon black having a nitrogen adsorption specific surface area as defined in JIS K6217-2:2001 of from 38 to 99 $m^2$/g in an amount of from 40 to 60 parts by mass based on 100 parts by mass of the rubber component, silica having a BET specific surface area (measured in conformity with ISO 5794/1) of from 40 to 350 $m^2$/g in an amount of not more than 10 parts by mass based on 100 parts by mass of the rubber component, an organic acid cobalt salt in an amount of not more than 0.3 parts by mass in terms of a cobalt amount based on 100 parts by mass of the rubber component, and sulfur in an amount of from 3.0 to 7.0 parts by mass based on 100 parts by mass of the rubber component.

[2] The tire as set forth in [1], wherein a ratio of rolling resistance of the tire casing to rolling resistance of the tire according to the coastdown method of JIS D4234 is satisfied with a relation of {(rolling resistance of tire casing)/(rolling resistance of tire) ≤ 0.80}.

[3] The tire as set forth in [1] or [2], wherein a tread portion forming member is stuck to a tire casing formed separately from a tread portion, and these tire casing and tread portion forming member are stuck to each other.

[4] The tire as set forth in [3], wherein the tire casing formed separately from a tread portion is one obtained by vulcanization molding such that in an unvulcanized tire casing, an amount of heat per unit volume to be given to the belt portion side is smaller than an amount of heat per unit volume to be given to the bead portion side.

[5] The tire as set forth in any one of [1] to [4], wherein the tire is a tire having a tire casing including a bead core, a carcass ply, a belt layer, and a side rubber; and a tread portion.

[6] The tire as set forth in any one of [1] to [5], which is a heavy duty tire.

ADVANTAGEOUS EFFECTS OF INVENTION

According to the present invention, by regulating a rolling resistance coefficient of a tire casing so as not to exceed 4.0, it is possible to make low rolling resistance and durability of a tire (tire including a tire casing and a tread portion) compatible with each other.

BRIEF DESCRIPTION OF DRAWINGS

FIG. 1 is a cross-sectional schematic view showing an example of a tire according to the present invention.
FIG. 2 is a partial cross-sectional schematic view showing a belt portion of the tire of FIG. 1.
FIG. 3 is a cross-sectional schematic view showing an example of a tire casing and a tread portion forming member, the both of which are used for manufacturing the tire of FIG. 1.

DESCRIPTION OF EMBODIMENTS

Embodiments of the present invention are hereunder described by reference to the accompanying drawings.

Incidentally, the "tire casing" as referred to in the present invention is a tire member exclusive of a tread portion and means both a tire member before sticking a tread portion and a tire member in which a tread portion is eliminated from a finished tire. To this tire casing, a base tread portion serving as a part of the tread portion may be stuck. In addition, the "tire casing" means the above-described tire member which has been vulcanized, and the above-described tire member that is unvulcanized is referred to as an "unvulcanized tire casing".

<Tire>

The tire of the present invention is characterized in that a tire casing thereof has a rolling resistance coefficient according to the coastdown method of JIS D4234 of not exceeding 4.0. In this way, by controlling the rolling resistance coefficient of the tire casing such that it does not exceed 4.0, it becomes possible to make a reduction of rolling resistance and an enhancement of durability of the tire (tire including a tire casing and a tread portion) compatible with each other. This rolling resistance coefficient is preferably in the range of not exceeding 3.8, and more preferably in the range of not exceeding 3.7. Incidentally, in the present invention, as for a test condition at the time of subjecting the tire casing to a test according to the coastdown method of JIS D4234, a condition determined on the basis of a size of a tire including a tire casing and a tread portion is adopted. In addition, though the tire casing which is subjected to this test may be either a tire casing before sticking a tread portion or a tire casing in which a tread portion is eliminated from a finished tire, it is suitably a tire casing in which a tread portion is eliminated from a finished tire.

Furthermore, when a ratio of rolling resistance of the tire casing to rolling resistance of the whole tire is satisfied with a relation of {(rolling resistance of tire casing)/(rolling resistance of tire) ≤ 0.80}, the rolling resistance of the tire can be reduced to the last stage of running, and even in retreated tires after retreatment as obtained by exchanging a tread portion of the tire, the rolling resistance can be reduced. In addition, when this ratio is 0.1 or more, it is possible to contemplate to reduce the rolling resistance and to enhance the tire durability. From this viewpoint, the foregoing ratio is preferably from 0.1 to 0.8, more preferably from 0.3 to 0.8, and still more preferably from 0.5 to 0.8.

Examples of a method for reducing the rolling resistance coefficient of the tire casing include various methods such as change of a rubber species of the tire member, change of a vulcanization condition, change of a structure of the tire casing, etc. As examples thereof, suitable examples of materials of a base tread, a belt coating rubber, a belt wedge rubber, a ply coating rubber, a belt undercushion rubber, and an inner liner rubber, each of which is located in the inside of the radial direction of a tread portion forming member in the tire casing, and suitable manufacturing methods of a tire and its members are hereunder described. However, these show merely a part of the embodiments of the present invention, and unless the gist of the present invention is deviated, these constitutions can be mutually combined, or various modifications can be made.

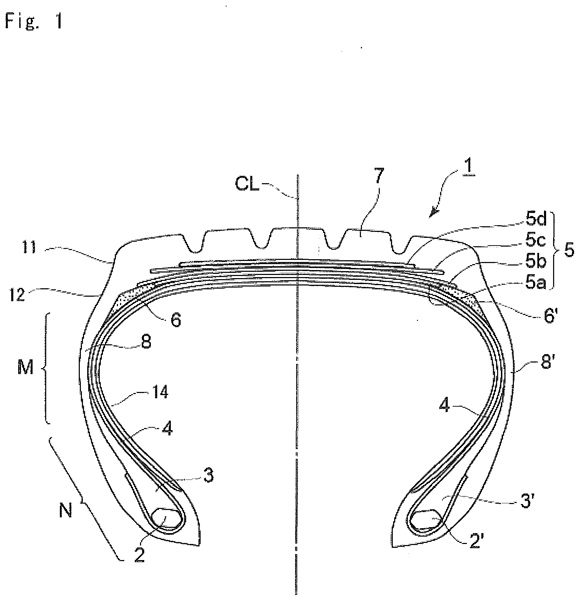

Each of the members of the tire according to the present invention is hereunder described. FIG. 1 is a cross-sectional schematic view showing an example of the tire of the present invention.

This tire 1 is composed of a tread portion 11 and a tire casing 12. The tread portion 11 is constituted of a tread rubber 7. As described later, the tire casing 12 includes bead cores 2 and 2', a carcass ply 4, belt layers 5a to 5d, and a side rubber 8, and a base tread 13.

A structure of the tire casing 12 is as follows. Stiffeners 3 and 3' extend outward in the radial direction of the tire 1 from a pair of the bead cores 2 and 2', respectively. The carcass ply 4 has a shape in which it goes through the outside of the stiffener 3, is folded inside the stiffener 3 by the bead core 2 to form a shape of a horseshoe tire casing, is folded by the bead core 2' on the opposite side, and is seized outside the stiffener 3'. A belt portion 5 composed of a plurality of belt layers (four layers of 5a to 5d in FIG. 1) is arranged outside the tire radius of the carcass ply 4. A belt undercushion rubber 6 is arranged in the neighborhoods of end portions of the belt layers 5a and 5b forming an intersecting layer. A belt end cover rubber (not shown) covering an end portion is arranged in end portions of the belt layers 5a to 5d. These belt undercushion rubber 6 and belt end cover rubber are generically named a belt edge rubber. A wedge-shaped belt wedge rubber 10 is arranged in the neighborhoods of an end portion between the belt layers 5b and 5c. The belt edge rubber and the belt wedge rubber 10 are also included in the belt portion 5.

The base tread 13 is arranged outside the tire radius of this belt portion 5, and the tread rubber 7 is further arranged thereon.

The side rubber 8 is arranged outside the tire axial direction (thickness direction) of the carcass ply 4 and between the tread rubber 7 and the stiffener 3. A portion where this side rubber 8 is arranged is named a side portion M, and the more inside of the tire radius than the side portion M is named a bead portion N. In this bead portion N, the bead cores 2 and 2' and the stiffeners 3 and 3' are arranged. An inner liner layer 14 is arranged as an air permeation preventive layer in the inside of the carcass ply 4. The tire casing 12 has these bead portion N, side portion M and belt portion 5.

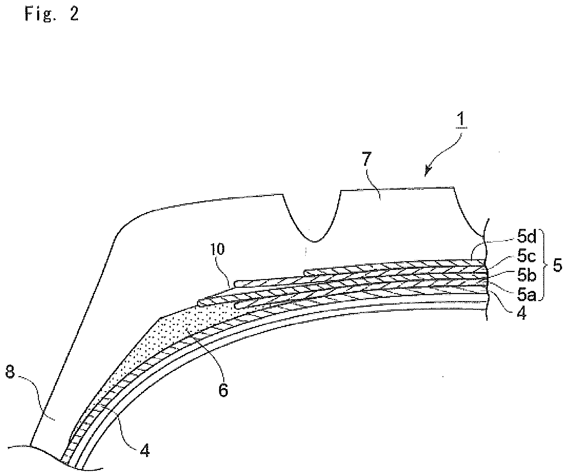

The belt undercushion rubber 6 is described in more detail. As shown in FIG. 2, the belt undercushion rubber 6 extends in the inside of the tire radial direction of the inner belt layer 5b forming an intersecting layer and the inside of the tire radial direction of the tread rubber 7 from the inside of the tire radial direction of the innermost belt layer 5a along the outside of the tire radial direction of the carcass ply 4 and extends to a space between the side rubber 8 and the carcass ply 4.

<Members for tire manufacture>

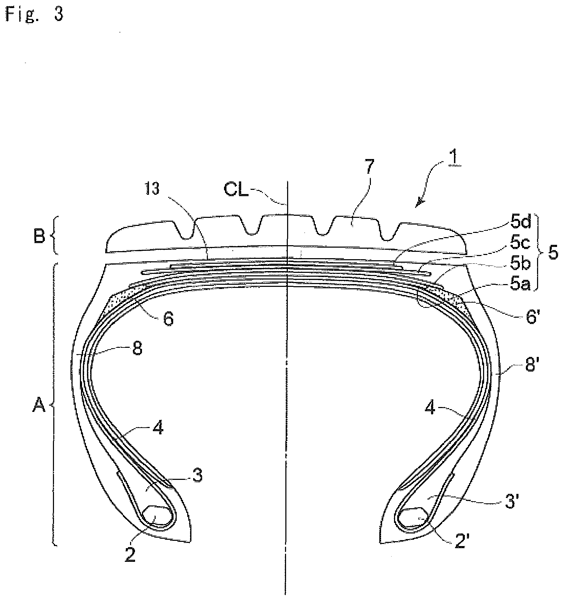

Next, members for manufacture of the tire 1 are described. FIG. 3 is a cross-sectional schematic view showing an example of a tire casing A and a tread portion forming member (precured tread member) B, the both being used for manufacture of the tire of FIG. 1.

As shown in FIG. 3, the tire 1 can be manufactured by sticking the tread portion forming member (precured tread member) B to the tire casing A prepared by vulcanizing an unvulcanized tire casing using an adhesive rubber such as a cushion rubber, etc. In FIG. 3, the same symbols as those in FIG. 1 represent the same portions.

In the tire casing prepared by vulcanizing separately from the tread portion, a part of the tread rubber 7 is arranged. That is, a part of the tread rubber 7 is arranged as the base tread 13 in the outside of the tire radial direction of the belt portion 5. This is made for the purposes of making adhesion to the precured member B good and enhancing durability of the tire.

Suitable examples of a rubber composition constituting the tire casing A are hereunder described.

[Rubber composition constituting base tread]

(Rubber component)

As a rubber component which is used for the rubber composition constituting the base tread 13 (base tread rubber composition), even in the case of joint use with other synthetic rubbers (for example, with a synthetic polyisoprene rubber (IR)), the proportion of the natural rubber is 60 % by mass or more, more preferably 70 % by mass or more, and still more preferably 80 % by mass or more in the rubber component. A natural rubber alone is even still more preferable.

Examples of other synthetic rubbers that may be present include a polybutadiene rubber (BR), a styrene-butadiene copolymer (SBR), or a styrene-isoprene copolymer (SIR).

In the case of using a natural rubber jointly with a butadiene rubber as the rubber component, a proportion of the butadiene rubber is preferably from 10 to 40 % by mass, more preferably from 20 to 40 % by mass, and still more preferably from 25 to 35 % by mass.

(Carbon black)

Carbon black having a nitrogen adsorption specific surface area as defined in JIS K6217-2:2001 of from 35 to 45 $m^2$/g is used for the rubber composition constituting the base tread 13. This carbon black is compounded in an amount of from 25 to 45 parts by mass, more preferably compounded in an amount of from 30 to 45 parts by mass, and still more preferably compounded in an amount of from 30 to 40 parts by mass based on 100 parts by mass of the rubber component. When the amount of the carbon black is 25 parts by mass or more, the strength of the base tread can be ensured, whereas when it is not more than 45 parts by mass, low heat generation properties and fatigue resistance of the base tread become good, and when the amount of the carbon black falls within the foregoing range, low heat generation properties and durability of the tire can be enhanced. An example of the carbon black includes FEF (nitrogen adsorption specific surface area: 40 to 42 $m^2$/g).

(Silica)

If desired, the rubber composition constituting the base tread 13 may be compounded with silica in addition to the above-described carbon black. When silica is compounded, as for its compounding amount, silica is preferably contained in an amount of not more than 10 parts by mass based on 100 parts by mass of the rubber component of the rubber composition.
As the silica, all of commercially available products can be used. Above all, it is preferable to use silica by wet process, silica by dry process, or colloidal silica, and it is especially preferable to use silica by wet process. A BET specific surface area (measured in conformity with ISO 5794/1) of silica is preferably from 40 to 350 $m^2$/g. Silica having a BET specific surface area falling within the foregoing range has such an advantage that both rubber reinforcing properties and dispersibility into the rubber component can be made compatible with each other. From this viewpoint, silica having a BET specific surface area falling within the range of from 80 to 350 $m^2$/g is more preferable, and silica having a BET specific surface area falling within the range of from 120 to 350 $m^2$/g is still more preferable. As such silica, commercially available products, such as trade names "NIPSIL AQ" (BET specific surface area = 220 $m^2$/g) and "NIPSIL KQ", both of which are manufactured by Tosoh Silica Corporation; a trade name "ULTRASIL VN3" (BET specific surface area = 175 $m^2$/g), manufactured by Degussa; etc., can be used.

(Vulcanizing agent)

Sulfur is used as a vulcanizing agent in an amount of from 1.0 to 7.0 parts by mass based on 100 parts by mass of the rubber component in the rubber composition constituting the base tread 13, and still more preferably in the range of from 1.0 to 3.0 parts by mass. When sulfur is compounded in an amount of not more than 7.0 parts by mass, it is possible to suitably prevent a lowering of aging resistance of the coating rubber composition from occurring. In addition, when sulfur is compounded in an amount of 1.0 part by mass or more, initial adhesion is enhanced, and hence, such is more preferable.

(Other compounding agents)

To the rubber composition constituting the base tread 13, other compounding agents than the above-described compounding agents, for example, a vulcanization activator such as zinc oxide, an organic acid (e.g., stearic acid, etc.), etc., a vulcanization accelerator, an inorganic filler other than silica, an anti-aging agent, an ozone deterioration preventive agent, a softener, etc., can be added.

(Vulcanization physical properties of rubber composition constituting the base tread 13)

From the viewpoint of enhancing low heat generation properties, a tan $\delta$ of the rubber composition constituting the base tread is preferably not more than 0.09.
A Banbury mixer, a roll, or an intensive mixer are suitably used as a kneading apparatus in manufacturing the rubber composition in the present invention.

[Coating rubber composition of the outermost belt layer 5d]

(Rubber component)

In the present invention, as a rubber component which is used for the coating rubber composition of the outermost belt layer 5d, a natural rubber and/or a synthetic polyisoprene rubber (IR) is preferable, and a natural rubber is more preferable. Even in the case of joint use with other synthetic rubbers, a proportion of the natural rubber is preferably 60 % by mass or more, more preferably 70 % by mass or more, and still more preferably 80 % by mass or more in the rubber component. A natural rubber alone is especially preferable.

Examples of other synthetic rubbers include a polybutadiene rubber (BR), a styrene-butadiene copolymer (SBR), and a styrene-isoprene copolymer (SIR).

(Carbon black)

In the present invention, carbon black having a nitrogen adsorption specific surface area as defined in JIS K6217-2:2001 of from 25 to 99 $m^2$/g is suitably used for the coating rubber composition constituting the outermost belt layer 5d. Examples of the carbon black include HAF (nitrogen adsorption specific surface area: 75 to 80 $m^2$/g), HS-HAF (nitrogen adsorption specific surface area: 78 to 83 $m^2$/g), LS-HAF (nitrogen adsorption specific surface area: 80 to 85 $m^2$/g), FEF (nitrogen adsorption specific surface area: 40 to 42 $m^2$/g), GPF (nitrogen adsorption specific surface area: 26 to 28 $m^2$/g), SRF (nitrogen adsorption specific surface area: 25 to 28 $m^2$/g), N339 (nitrogen adsorption specific surface area: 88 to 96 $m^2$/g), LI-HAF (nitrogen adsorption specific surface area: 73 to 75 $m^2$/g), IISAF (nitrogen adsorption specific surface area: 97 to 98 $m^2$/g), HS-IISAF (nitrogen adsorption specific surface area: 98 to 99 $m^2$/g). Of these, HAF, HS-HAF, LS-HAF, FEF, LI-HAF, and GPF are preferable. This carbon black is preferably compounded in an amount of from 30 to 60 parts by mass based on 100 parts by mass of the rubber component. When the amount of the carbon black is 30 parts by mass or more, the strength of the belt layer 5d can be ensured, whereas when it is not more than 60 parts by mass, low heat generation properties and fatigue resistance of the belt layer 5d become good, and when the amount of the carbon black falls within the foregoing range, low heat generation properties and durability of the tire can be enhanced.

(Silica)

In the present invention, if desired, the coating rubber composition of the outermost belt layer 5d may be compounded with silica in addition to the carbon black. When silica is compounded, as for its compounding amount, silica is preferably compounded in an amount of not more than 10 parts by mass based on 100 parts by mass of the rubber component of the coating rubber composition.

As the silica, all of commercially available products can be used. Above all, it is preferable to use silica by wet process, silica by dry process, or colloidal silica, and it is especially preferable to use silica by wet process. A BET specific surface area (measured in conformity with ISO 5794/1) of silica is preferably from 40 to 350 $m^2$/g. Silica having a BET specific surface area falling within the foregoing range has such an advantage that both rubber reinforcing properties and dispersibility into the rubber component can be made compatible with each other. From this viewpoint, silica having a BET specific surface area falling within the range of from 80 to 350 $m^2$/g is more preferable, and silica having a BET specific surface area falling within the range of from 120 to 350 $m^2$/g is especially preferable. As such silica, commercially available products, such as trade names "NIPSIL AQ" (BET specific surface area = 220 $m^2$/g) and "NIPSIL KQ", both of which are manufactured by Tosoh Silica Corporation; a trade name "ULTRASIL VN3" (BET specific surface area = 175 $m^2$/g), manufactured by Degussa; etc., can be used.

(Adhesion accelerator)

The coating rubber composition of the outermost belt layer 5d in the present invention is preferably compounded with an organic acid cobalt salt in an amount of not more than 0.4 parts by mass in terms of a cobalt amount based on 100 parts by mass of the rubber component. The coating rubber composition is more preferably compounded with an organic acid cobalt salt in an amount of from 0.01 to 0.4 parts by mass in terms of a cobalt amount, and still more preferably compounded with an organic acid cobalt salt in an amount of from 0.02 to 0.3 parts by mass in terms of a cobalt amount. When the organic acid cobalt salt is compounded in an amount of not more than 0.4 parts by mass in terms of a cobalt amount, it is possible to suitably prevent a lowering of aging resistance of the coating rubber composition from occurring. In addition, when the organic acid cobalt salt is compounded in an amount of 0.01 parts by mass or more in terms of a cobalt amount, initial adhesion is enhanced, and hence, such is more preferable.

Examples of the organic acid cobalt salt include cobalt naphthenate, cobalt rhodinate, cobalt stearate, other linear or branched monocarboxylic acid cobalt salts having the carbon number of from about 5 to 20 (for example, a trade name "MANOBOND C" Series, manufactured by OM Group Inc., etc.).

(Vulcanizing agent)

It is preferable to compound sulfur as a vulcanizing agent of the coating rubber composition of the outermost belt layer 5d in the present invention in an amount of not more than 7.0 parts by mass based on 100 parts by mass of the rubber component. In particular, the compounding amount of sulfur is more preferably in the range of from 3.0 to 7.0 parts by mass, and still more preferably in the range of from 4.0 to 6.0 parts by mass. When sulfur is compounded in an amount of not more than 7.0 parts by mass, it is possible to suitably prevent a lowering of aging resistance of the coating rubber composition from occurring. In addition, when sulfur is compounded in an amount of 3.0 parts by mass or more, initial adhesion is enhanced, and hence, such is more preferable.

(Other compounding agents)

To the coating rubber composition of the outmost belt layer 5d in the present invention, other compounding agents than the above-described compounding agents, for example, a vulcanization activator such as zinc oxide, an organic acid (e.g., stearic acid, etc.), etc., a vulcanization accelerator, an inorganic filler other than silica, an anti-aging agent, an ozone deterioration preventive agent, a softener, etc., can be added.

(Vulcanization physical properties of coating rubber composition of the outermost belt layer 5d)

From the viewpoint of enhancing low heat generation properties, a tan $\delta$ of the coating rubber composition of the outermost belt layer 5d is preferably not more than 0.17.

A Banbury mixer, a roll, or an intensive mixer are used as a kneading apparatus which is used in manufacturing the coating rubber composition according to the present invention.

[Belt wedge rubber composition]

(Rubber component)

In the present invention, as a rubber component which is used for the rubber composition of the belt wedge rubber 10 of the belt portion 5, even in the case of joint use with other synthetic rubber (for example, a synthetic polyisoprene rubber (IR)), a proportion of the natural rubber is 60 % by mass or more, more preferably 70 % by mass or more, and still more preferably 80 % by mass or more in the rubber component. A natural rubber alone is especially preferable.

Examples of other synthetic rubbers that may be included are a polybutadiene rubber (BR), a styrene-butadiene copolymer (SBR) and a styrene-isoprene copolymer (SIR).

(Carbon black)

In the present invention, examples of carbon black having a nitrogen adsorption specific surface area as defined in JIS K6217-2:2001 of from 38 to 99 m$^2$/g, which is used for the rubber composition of the belt wedge rubber 10 of the belt portion 5, include HAF (nitrogen adsorption specific surface area: 75 to 80 m$^2$/g), HS-HAF (nitrogen adsorption specific surface area: 78 to 83 m$^2$/g), LS-HAF (nitrogen adsorption specific surface area: 80 to 85 m$^2$/g), FEF (nitrogen adsorption specific surface area: 40 to 42 m$^2$/g), N339 (nitrogen adsorption specific surface area: 88 to 96 m$^2$/g), LI-HAF (nitrogen adsorption specific surface area: 73 to 75 m$^2$/g), IISAF (nitrogen adsorption specific surface area: 97 to 98 m$^2$/g), HS-IISAF (nitrogen adsorption specific surface area: 98 to 99 m$^2$/g). Of these, from the viewpoint of making both low heat generation properties and durability compatible with each other, HAF, HS-HAF, LS-HAF, FEF, and LI-HAF are preferable. From this viewpoint, the carbon black is more preferably HAF or FEF, and still more preferably FEF. This carbon black is compounded in an amount of from 40 to 60 parts by mass based on 100 parts by mass of the rubber component. When the amount of the carbon black is 40 parts by mass or more, the strength of the belt wedge rubber can be ensured, whereas when it is not more than 60 parts by mass, low heat generation properties and fatigue resistance of the belt wedge rubber become good, and when the amount of the carbon black falls within the foregoing range, low heat generation properties and durability of the tire can be enhanced. From this viewpoint, the amount of the carbon black is more preferably from 40 to 55 parts by mass, and still more preferably from 40 to 50 parts by mass.

(Silica)

In the present invention, the rubber composition of the belt wedge rubber 10 of the belt portion 5 is compounded with silica in addition to the carbon black. Silica is contained in an amount of not more than 10 parts by mass based on 100 parts by mass of the rubber component of the rubber composition of the belt wedge rubber 10. When silica is compounded, its compounding amount is more preferably from 1 to 10 parts by mass, and still more preferably from 2 to 8 parts by mass.

As the silica, all of commercially available products can be used. Above all, it is preferable to use silica by wet process, silica by dry process, or colloidal silica, and it is especially preferable to use silica by wet process. A BET specific surface area (measured in conformity with ISO 5794/1) of silica is from 40 to 350 m$^2$/g. Silica having a BET specific surface area falling within the foregoing range has such an advantage that both rubber reinforcing properties and dispersibility into the rubber component can be made compatible with each other. From this viewpoint, silica having a BET specific surface area falling within the range of from 80 to 350 m$^2$/g is more preferable, and silica having a BET specific surface area falling within the range of from 120 to 350 m$^2$/g is especially preferable. As such silica, commercially available products, such as trade names "NIPSIL AQ" (BET specific surface area = 220 m$^2$/g) and "NIPSIL KQ", both of which are manufactured by Tosoh Silica Corporation; a trade name "ULTRASIL VN3" (BET specific surface area = 175 m$^2$/g), manufactured by Degussa; etc., can be used.

(Adhesion accelerator)

The rubber composition of the belt wedge rubber 10 of the belt portion 5 in the present invention is compounded with an organic acid cobalt salt in an amount of not more than 0.3 parts by mass in terms of a cobalt amount based on 100 parts by mass of the rubber component. The organic acid cobalt salt is preferably compounded in an amount of not more than 0.2 parts by mass in terms of a cobalt amount, and more preferably compounded in an amount of not more than 0.1 parts by mass in terms of a cobalt amount. From the viewpoint of preventing migration of the organic acid cobalt salt from a belt coating rubber to enhance adhesion between a steel cord and a coating rubber, it is preferable that a small amount of the organic acid cobalt salt is compounded, and from the viewpoint of increasing aging resistance of the belt wedge rubber 10, it is preferable that the organic acid cobalt salt is not compounded.

Examples of the organic acid cobalt salt include cobalt naphthenate, cobalt rhodinate, cobalt stearate, other linear or branched monocarboxylic acid cobalt salts having the carbon number of from about 5 to 20 (for example, a trade name "MANOBOND C" Series, manufactured by OM Group Inc., etc.).

(Vulcanizing agent)

Sulfur is used as a vulcanizing agent of the rubber composition of the belt wedge rubber 10 of the belt portion 5 in the present invention in in the range of from 3.0 to 7.0 by mass based on 100 parts by mass of the rubber component. In particular, the compounding amount of sulfur is more preferably in the range of 4 . 0 to 6.0 parts by mass. When sulfur is compounded in an amount of not more than 7.0 parts by mass, it is possible to suitably prevent a lowering of aging resistance of the belt wedge rubber 10 from occurring. In addition, when sulfur is compounded in an amount of 3.0 parts by mass or more, a lowering of the sulfur content of the coating rubber composition of the belt portion 5 is suppressed, and initial adhesion of the coating rubber composition is enhanced, and hence, such is more preferable.

(Other compounding agents)

To the rubber composition of the belt wedge rubber 10 of the belt portion 5 in the present invention, other compounding agents than the above-described compounding agents, for example, a vulcanization activator such as zinc oxide, an organic acid (e.g., stearic acid, etc.), etc., a vulcanization accelerator, an inorganic filler other than silica, an anti-aging agent, an ozone deterioration preventive agent, a softener, etc., can be added.

(Vulcanization physical properties of belt wedge rubber of the belt portion 5)

From the viewpoint of enhancing low heat generation properties, a tan δ of the belt wedge rubber 10 of the belt portion 5 is preferably not more than 0.17.

A Banbury mixer, a roll, or an intensive mixer are used as a kneading apparatus which is used in manufacturing the rubber composition of the belt wedge rubber 10 according to the present invention.

[Ply coating rubber composition]

(Rubber component)

In the present invention, as a rubber component which is used for the coating rubber composition of the carcass ply 4, a natural rubber and/or a synthetic polyisoprene rubber (IR) is preferable, and a natural rubber is more preferable. Even in the case of joint use with other synthetic rubbers, a proportion of the natural rubber is preferably 60 % by mass or more, more preferably 70 % by mass or more, and still more preferably 80 % by mass or more in the rubber component. A natural rubber alone is especially preferable.

Examples of other synthetic rubbers include a polybutadiene rubber (BR), a styrene-butadiene copolymer (SBR), and a styrene-isoprene copolymer (SIR).

(Carbon black)

In the present invention, carbon black having a nitrogen adsorption specific surface area as defined in JIS K6217-2:2001 of from 25 to 90 $m^2/g$ is suitably used for the coating rubber composition of the carcass ply 4. Examples thereof include HAF (nitrogen adsorption specific surface area: 75 to 80 $m^2/g$), HS-HAF (nitrogen adsorption specific surface area: 78 to 83 $m^2/g$), LS-HAF (nitrogen adsorption specific surface area: 80 to 85 $m^2/g$) , FEF (nitrogen adsorption specific surface area: 40 to 42 $m^2/g$), GPF (nitrogen adsorption specific surface area: 26 to 28 $m^2/g$), SRF (nitrogen adsorption specific surface area: 25 to 28 $m^2/g$), N339 (nitrogen adsorption specific surface area: 88 to 96 $m^2/g$), LI-HAF (nitrogen adsorption specific surface area: 73 to 75 $m^2/g$). Of these, HAF, HS-HAF, LS-HAF, FEF, LI-HAF, and GPF are preferable. This carbon black is preferably compounded in an amount of from 40 to 60 parts by mass based on 100 parts by mass of the rubber component. When the amount of the carbon black is 40 parts by mass or more, the strength of the belt wedge rubber can be ensured, whereas when it is not more than 60 parts by mass, low heat generation properties and fatigue resistance of the belt layer 5d become good, and when the amount of the carbon black falls within the foregoing range, low heat generation properties and durability of the tire can be enhanced.

(Silica)

In the present invention, if desired, the coating rubber composition of the carcass ply 4 may be compounded with silica in addition to the carbon black. When silica is compounded, as for its compounding amount, silica is preferably contained in an amount of not more than 10 parts by mass based on 100 parts by mass of the rubber component of the coating rubber composition.

As the silica, all of commercially available products can be used. Above all, it is preferable to use silica by wet process, silica by dry process, or colloidal silica, and it is especially preferable to use silica by wet process. A BET specific surface area (measured in conformity with ISO 5794/1) of silica is preferably from 40 to 350 $m^2/g$. Silica having a BET specific surface area falling within the foregoing range has such an advantage that both rubber reinforcing properties and dispersibility into the rubber component can be made compatible with each other. From this viewpoint, silica having a BET specific surface area falling within the range of from 80 to 350 $m^2/g$ is more preferable, and silica having a BET specific surface area falling within the range of from 120 to 350 $m^2/g$ is especially preferable. As such silica, commercially available products, such as trade names "NIPSIL AQ" (BET specific surface area = 220 $m^2/g$) and "NIPSIL KQ", both of which are manufactured by Tosoh Silica Corporation; a trade name "ULTRASIL VN3" (BET specific surface area = 175 $m^2/g$), manufactured by Degussa; etc., can be used.

(Adhesion accelerator)

The coating rubber composition of the carcass ply 4 in the present invention is preferably compounded with an organic acid cobalt salt in an amount of not more than 0.4 parts by mass in terms of a cobalt amount based on 100 parts by mass of the rubber component. The organic acid cobalt salt is more preferably compounded in an amount of from 0.01 to 0.4 parts by mass in terms of a cobalt amount, and still more preferably compounded in an amount of from 0.02 to 0.3 parts by mass in terms of a cobalt amount. When the organic acid cobalt salt is compounded in an amount of not more than 0.4 parts by mass in terms of a cobalt amount, it is possible to suitably prevent a lowering of aging resistance of the coating rubber composition from occurring. In addition, when the organic acid cobalt salt is compounded in an amount of 0.01 parts by mass or more in terms of a cobalt amount, initial adhesion is enhanced, and hence, such is more preferable.

Examples of the organic acid cobalt salt include cobalt naphthenate, cobalt rhodinate, cobalt stearate, other linear or branched monocarboxylic acid cobalt salts having the carbon number of from about 5 to 20 (for example, a trade name "MANOBOND C" Series, manufactured by OM Group Inc., etc.).

(Vulcanizing agent)

It is preferable to compound sulfur as a vulcanizing agent of the coating rubber composition of the carcass ply 4 in the present invention in an amount of not more than 7.0 parts by mass based on 100 parts by mass of the rubber component. In particular, the compounding amount of sulfur is more preferably in the range of from 3.0 to 7.0 parts by mass, and still more preferably in the range of from 4.0 to 6.0 parts by mass. When sulfur is compounded in an amount of not more than 7.0 parts by mass, it is possible to suitably prevent a lowering of aging resistance of the coating rubber composition from occurring. In addition, when sulfur is compounded in an amount of 3.0 parts by mass or more, initial adhesion is enhanced, and hence, such is more preferable.

(Other compounding agents)

To the coating rubber composition of the carcass ply 4 in the present invention, other compounding agents than the above-described compounding agents, for example, a vulcanization activator such as zinc oxide, an organic acid (e.g., stearic acid, etc.), etc., a vulcanization accelerator, an inorganic filler other than silica, an anti-aging agent, an ozone deterioration preventive agent, a softener, etc., can be added.

(Vulcanization physical properties of coating rubber composition of the carcass ply 4)

From the viewpoint of enhancing low heat generation properties, a tan $\delta$ of the coating rubber composition of the carcass ply 4 is preferably not more than 0.17.
A Banbury mixer, a roll, or an intensive mixer are used as a kneading apparatus which is used in manufacturing the coating rubber composition according to the present invention.

[Belt undercushion rubber composition]

(Rubber component)

In the present invention, as a rubber component which is used for the rubber composition of the belt undercushion rubber 6, a natural rubber and/or a synthetic polyisoprene rubber (IR) is preferable, and a natural rubber is more preferable. Even in the case of joint use with other synthetic rubbers, a proportion of the natural rubber is preferably 60 % by mass or more, more preferably 70 % by mass or more, and still more preferably 80 % by mass or more in the rubber component. A natural rubber alone is especially preferable.
Examples of other synthetic rubbers include a polybutadiene rubber (BR), a styrene-butadiene copolymer (SBR), and a styrene-isoprene copolymer (SIR).

(Carbon black)

In the present invention, carbon black having a nitrogen adsorption specific surface area as defined in JIS K6217-2:2001 of from 25 to 90 m$^2$/g is suitably used for the rubber composition of the belt undercushion rubber 6. Examples thereof include HAF (nitrogen adsorption specific surface area: 75 to 80 m$^2$/g), HS-HAF (nitrogen adsorption specific surface area: 78 to 83 m$^2$/g), LS-HAF (nitrogen adsorption specific surface area: 80 to 85 m$^2$/g), FEF (nitrogen adsorption specific surface area: 40 to 42 m$^2$/g), GPF (nitrogen adsorption specific surface area: 26 to 28 m$^2$/g), SRF (nitrogen adsorption specific surface area: 25 to 28 m$^2$/g), N339 (nitrogen adsorption specific surface area: 88 to 96 m$^2$/g), LI-HAF (nitrogen adsorption specific surface area: 73 to 75 m$^2$/g). Of these, HAF, HS-HAF, LS-HAF, FEF, LI-HAF, and GPF are preferable, HAF and FEF are more preferable, and HAF is still more preferable. This carbon black is preferably compounded in an amount of from 25 to 45 parts by mass based on 100 parts by mass of the rubber component. When the amount of the carbon black is 25 parts by mass or more, the strength of the belt undercushion rubber 6 can be ensured, whereas when it is not more than 45 parts by mass, low heat generation properties and fatigue resistance of the belt undercushion rubber 6 become good, and when the amount of the carbon black falls within the foregoing range, low heat generation properties and durability of the tire can be enhanced. From this viewpoint, the amount of the carbon black is more preferably from 25 to 40 parts by mass, and still more preferably from 30 to 40 parts by mass.

(Silica)

In the present invention, if desired, the rubber composition of the belt undercushion rubber 6 may contain silica in addition to the carbon black. Silica is preferably contained in an amount of not more than 10 parts by mass based on 100 parts by mass of the rubber component of the rubber composition of the belt undercushion rubber 6.

As the silica, all of commercially available products can be used. Above all, it is preferable to use silica by wet process, silica by dry process, or colloidal silica, and it is especially preferable to use silica by wet process. A BET specific surface area (measured in conformity with ISO 5794/1) of silica is preferably from 40 to 350 $m^2$/g. Silica having a BET specific surface area falling within the foregoing range has such an advantage that both rubber reinforcing properties and dispersibility into the rubber component can be made compatible with each other. From this viewpoint, silica having a BET specific surface area falling within the range of from 80 to 350 $m^2$/g is more preferable, and silica having a BET specific surface area falling within the range of from 120 to 350 $m^2$/g is especially preferable. As such silica, commercially available products, such as trade names "NIPSIL AQ" (BET specific surface area = 220 $m^2$/g) and "NIPSIL KQ", both of which are manufactured by Tosoh Silica Corporation; a trade name "ULTRASIL VN3" (BET specific surface area = 175 $m^2$/g), manufactured by Degussa; etc., can be used.

(Adhesion accelerator)

The coating rubber composition of the belt undercushion rubber 6 in the present invention preferably contains an organic acid cobalt salt in an amount of not more than 0.4 parts by mass in terms of a cobalt amount based on 100 parts by mass of the rubber component. The organic acid cobalt salt is more preferably contained in an amount of from 0.01 to 0.4 by mass in terms of a cobalt amount, and still more preferably contained in an amount of from 0.02 to 0.3 parts by mass in terms of a cobalt amount. When the organic acid cobalt salt is contained in an amount of not more than 0.4 parts by mass in terms of a cobalt amount, it is possible to suitably prevent a lowering of aging resistance of the rubber composition of the belt undercushion rubber 6 from occurring. In addition, when the organic acid cobalt salt is contained in an amount of 0.01 parts by mass or more in terms of a cobalt amount, initial adhesion is enhanced, and hence, such is more preferable.

Examples of the organic acid cobalt salt include cobalt naphthenate, cobalt rhodinate, cobalt stearate, other linear or branched monocarboxylic acid cobalt salts having the carbon number of from about 5 to 20 (for example, a trade name "MANOBOND C" Series, manufactured by OM Group Inc., etc.).

(Vulcanizing agent)

It is preferable to contain sulfur as a vulcanizing agent of the rubber composition of the belt undercushion rubber 6 in the present invention in an amount of not more than 7.0 parts by mass based on 100 parts by mass of the rubber component. In particular, the amount of sulfur is more preferably in the range of from 3.0 to 7.0 parts by mass, and still more preferably in the range of from 4.0 to 6.0 parts by mass. When sulfur is contained in an amount of not more than 7.0 parts by mass, it is possible to suitably prevent a lowering of aging resistance of the rubber composition of the belt undercushion rubber 6 from occurring. In addition, when sulfur is contained in an amount of 3.0 parts by mass or more, initial adhesion is enhanced, and hence, such is more preferable.

(Other compounding agents)

To the rubber composition of the belt undercushion rubber 6 in the present invention, other compounding agents than the above-described compounding agents, for example, a vulcanization activator such as zinc oxide, an organic acid (e.g., stearic acid, etc.), etc., a vulcanization accelerator, an inorganic filler other than silica, an anti-aging agent, an ozone deterioration preventive agent, a softener, etc., can be added.

(Vulcanization physical properties of the belt undercushion rubber 6)

From the viewpoint of enhancing low heat generation properties, a tan $\delta$ of the belt undercushion rubber 6 is preferably not more than 0.17. Here, the tan $\delta$ is a value measured for a tan $\delta$ of, for example, a belt undercushion rubber in the neighborhood of the center (most delayed point of vulcanization) of the belt undercushion rubber of the tire using a spectrometer (dynamic viscoelasticity measuring tester), manufactured by Toyo Seiki Seisaku-sho, Ltd. under a condition at an initial load of 160 g, a frequency of 52 Hz, a measuring temperature of 23°C, and a strain of 2 %.

A Banbury mixer, a roll, or an intensive mixer are used as a kneading apparatus which is used in manufacturing the rubber composition of the belt undercushion rubber 6 according to the present invention.

[Rubber composition of inner liner layer]

(Rubber component)

In the present invention, as a rubber component which is used for the rubber composition of the inner liner layer 14, a natural rubber and/or a synthetic polyisoprene rubber (IR) is preferable, and a natural rubber is more preferable. Even in the case of joint use with other synthetic rubbers, a proportion of the natural rubber is preferably 60 % by mass or more, more preferably 70 % by mass or more, and still more preferably 80 % by mass or more in the rubber component. A natural rubber alone is especially preferable.

Examples of other synthetic rubbers include a polybutadiene rubber (BR), a styrene-butadiene copolymer (SBR), and a styrene-isoprene copolymer (SIR).

(Carbon black)

In the present invention, carbon black having a nitrogen adsorption specific surface area as defined in JIS K6217-2:2001 of from 25 to 60 $m^2/g$ is suitably used for the rubber composition of the inner liner layer 14. Examples thereof include FEF (nitrogen adsorption specific surface area: 40 to 42 $m^2/g$), GPF (nitrogen adsorption specific surface area: 26 to 28 $m^2/g$), SRF (nitrogen adsorption specific surface area: 25 to 28 $m^2/g$), MAF (nitrogen adsorption specific surface area: 45 to 52 $m^2/g$), HS-MAF (nitrogen adsorption specific surface area: 54 to 58 $m^2/g$). Of these, FEF and GPF are preferable. This carbon black is preferably compounded in an amount of from 45 to 60 parts by mass based on 100 parts by mass of the rubber component. When the amount of the carbon black is 45 parts by mass or more, the strength of the inner liner layer 14 can be ensured, whereas when it is not more than 60 parts by mass, low heat generation properties and fatigue resistance of the inner liner layer 14 become good, and when the amount of the carbon black falls within the foregoing range, low heat generation properties and durability of the tire can be enhanced.

(Silica)

In the present invention, if desired, the rubber composition of the inner liner layer 14 may contain silica in addition to the carbon black. Silica is preferably contained in an amount of not more than 10 parts by mass based on 100 parts by mass of the rubber component of the inner liner layer rubber composition adjacent to the ply coating rubber.

As the silica, all of commercially available products can be used. Above all, it is preferable to use silica by wet process, silica by dry process, or colloidal silica, and it is especially preferable to use silica by wet process. A BET specific surface area (measured in conformity with ISO 5794/1) of silica is preferably from 40 to 350 $m^2/g$. Silica having a BET specific surface area falling within the foregoing range has such an advantage that both rubber reinforcing properties and dispersibility into the rubber component can be made compatible with each other. From this viewpoint, silica having a BET specific surface area falling within the range of from 80 to 350 $m^2/g$ is more preferable, and silica having a BET specific surface area falling within the range of from 120 to 350 $m^2/g$ is especially preferable. As such silica, commercially available products, such as trade names "NIPSIL AQ" (BET specific surface area = 220 $m^2/g$) and "NIPSIL KQ", both of which are manufactured by Tosoh Silica Corporation; a trade name "ULTRASIL VN3" (BET specific surface area = 175 $m^2/g$), manufactured by Degussa; etc., can be used.

(Adhesion accelerator)

The rubber composition of the inner liner layer 14 in the present invention preferably contains an organic acid cobalt salt in an amount of not more than 0.4 parts by mass in terms of a cobalt amount based on 100 parts by mass of the rubber component. The organic acid cobalt salt is more preferably contained in an amount of from 0.01 to 0.4 by mass in terms of a cobalt amount, and still more preferably contained in an amount of from 0.02 to 0.3 parts by mass in terms of a cobalt amount. When the organic acid cobalt salt is contained in an amount of not more than 0.4 parts by mass in terms of a cobalt amount, it is possible to suitably prevent a lowering of aging resistance of the inner liner layer adjacent to the ply coating rubber from occurring. In addition, when the organic acid cobalt salt is contained in an amount of 0.01 parts by mass or more in terms of a cobalt amount, initial adhesion is enhanced, and hence, such is more preferable.

Examples of the organic acid cobalt salt include cobalt naphthenate, cobalt rhodinate, cobalt stearate, other linear or branched monocarboxylic acid cobalt salts having the carbon number of from about 5 to 20 (for example, a trade name "MANOBOND C" Series, manufactured by OM Group Inc., etc.).

(Vulcanizing agent)

It is preferable to contain sulfur as a vulcanizing agent of the rubber composition of the inner liner layer 14 in the present invention in an amount of not more than 7.0 parts by mass based on 100 parts by mass of the rubber component. In particular, the amount of sulfur is more preferably in the range of from 3.0 to 7.0 parts by mass, and still more preferably in the range of from 4.0 to 6.0 parts by mass. When sulfur is contained in an amount of not more than 7.0 parts by mass, it is possible to suitably prevent a lowering of aging resistance of the inner liner layer adjacent to the ply coating rubber from occurring. In addition, when sulfur is contained in an amount of 3.0 parts by mass or more, initial adhesion is enhanced, and hence, such is more preferable.

(Other compounding agents)

To the rubber composition of the inner liner layer 14 in the present invention, other compounding agents than the above-described compounding agents, for example, a vulcanization activator such as zinc oxide, an organic acid (e.g., stearic acid, etc.), etc., a vulcanization accelerator, an inorganic filler other than silica, an anti-aging agent, an ozone deterioration preventive agent, a softener, etc., can be added.

(Vulcanization physical properties of rubber composition of the inner liner layer 14)

From the viewpoint of enhancing low heat generation properties, a tan $\delta$ of the rubber composition of the inner liner layer 14 is preferably not more than 0.17. Here, the tan $\delta$ is a value measured for the inner liner layer rubber adjacent to the ply coating rubber, for example, at the crown center position of the tire using a spectrometer (dynamic viscoelasticity measuring tester), manufactured by Toyo Seiki Seisaku-sho, Ltd. under a condition at an initial load of 160 g, a frequency of 52 Hz, a measuring temperature of 23°C, and a strain of 2 %.
A Banbury mixer, a roll, or an intensive mixer are used as a kneading apparatus which is used in manufacturing the rubber composition of the inner liner layer 14 according to the present invention.

<Manufacturing method of tire casing>

The tire casing A is manufactured by vulcanizing an unvulcanized tire casing. At this time of vulcanization, an unvulcanized tire casing is first formed. The unvulcanized tire casing is formed in the same manner as that in a building step of a green tire in a known tire manufacturing method. For example, a carcass ply having been rubber-coated with an unvulcanized rubber is wound around a building drum; a bead core is set in both end portions thereof; the both end portions are then folded; and an unvulcanized rubber of a sidewall portion is further stuck thereto. Subsequently, a central portion thereof in the width direction is formed into an annular shape of a horseshoe cross section by expanding the diameter; an unvulcanized belt layer is then provided on the outer periphery of the carcass layer; and a thin layer (base tread 13) of a rubber composition which is preferably the same as or analogous to the inner layer of the tread rubber 7 is stuck thereonto. There can be thus obtained an unvulcanized tire casing.
By setting the unvulcanized tire casing in a vulcanizing mold tool (mold) and performing vulcanization molding, the tire casing A having a part of the tread rubber 7 or not having the tread rubber 7 at all can be obtained.
A method for vulcanizing the unvulcanized tire casing is preferably a method for surrounding the unvulcanized tire casing from the outside by a vulcanizing mold tool, in which a bead portion side of the unvulcanized tire casing is heated by a first heating unit; a belt portion side of the unvulcanized tire casing is heated by a second heating unit; and vulcanization molding is performed such that an amount of heat per unit volume to be given to the belt portion side by the second heating unit is smaller than an amount of heat per unit volume to be given to the bead portion side by the first heating unit.
In usual heavy duty tires (for example, pneumatic radial tires for trucks or buses), since a thickness of the belt portion side of the tire casing is thin as compared with a maximum thickness of the bead portion N, a most delayed point of vulcanization is present within the bead portion N. As described above, when a smaller amount of heat per unit volume is given to the belt portion side, whereas a larger amount of heat per unit volume is given to the bead portion side, the belt portion side does not become excessively vulcanized, and not only adhesion (both initial adhesion and adhesion after long-term use) of the coating rubber composition of the innermost belt layer 5a to the steel cord is enhanced, but the tan $\delta$ becomes low, and low heat generation properties are enhanced. Hence, such is preferable.
In order to give a smaller amount of heat per unit volume to the belt portion side and a larger amount of heat per unit volume to the bead portion side, for example, there may be taken a technique in which at the time of charging an unvulcanized tire casing in a vulcanizing mold tool and adding pressure and heat from the inside of the unvulcanized tire casing by a vulcanizing bladder, heating is performed at a higher temperature from a first heating unit of the portion of the vulcanizing mold tool corresponding to the bead portion N of the unvulcanized tire casing, and heating is performed at a lower temperature than that of the first heating unit from a second heating unit of the portion of the vulcanizing mold tool corresponding to the belt portion side of the unvulcanized tire casing.
In the manufacturing method of the present invention, a vulcanizing temperature at which the innermost belt layer 5a (in particular, a most delayed point of vulcanization of the innermost belt layer 5a) arrives at the time of vulcanization of the unvulcanized tire casing is from 110 to 160°C; a vulcanizing temperature at which the bead portion N (in particular, a most delayed point of vulcanization of the bead portion N) arrives is from 125 to 180°C; and the vulcanizing temperature at which the most delayed point of vulcanization of the innermost belt layer 5a arrives is preferably lower by from 2 to 25°C, more preferably lower by from 4 to 25°C, still more preferably lower by from 4 to 20°C, and yet still more preferably lower by from 4 to 10°C than the vulcanizing temperature at which the bead portion N arrives.

When the vulcanizing temperatures fall within the foregoing ranges, it is possible to prevent excessive vulcanization of the belt portion side from occurring and to enhance steel cord initial adhesion and low heat generation properties of the coating rubber composition of the innermost belt layer 5a.

When the vulcanizing temperature at which the innermost belt layer 5a (in particular, a most delayed point of vulcanization of the innermost belt layer 5a) arrives is 110°C or higher, the vulcanization suitably proceeds, and hence, such is preferable; whereas when it is not higher than 160°C, the initial adhesion to the steel cord is enhanced, and hence, such is preferable. From this viewpoint, the vulcanizing temperature is preferably from 110 to 160°C, more preferably from 120 to 160°C, and still more preferably from 130 to 160°C. In addition, when the vulcanizing temperature at which the bead portion N (in particular, a most delayed point of vulcanization of the innermost belt layer 5a) arrives is 125°C or higher, a vulcanizing time of the tire casing A can be shortened, and hence, such is preferable; whereas when it is not higher than 180°C, the durability of the bead portion is enhanced, and hence, such is preferable. From this viewpoint, the vulcanizing temperature is preferably from 125 to 180°C, more preferably from 130 to 170°C, and still more preferably from 145 to 165°C.

<Manufacturing method of precured tread member (tread portion forming member) B>

On the other hand, the precured tread member (tread portion forming member) B can be suitably manufactured according to the following procedures. First of all, a tread material made of an unvulcanized rubber in which a cross section thereof in the width direction has a substantially trapezoidal shape is extruded from an extruder (not shown) and then cut into a prescribed length. This cut strip-shaped tread material is, for example, set in a vulcanizing mold tool provided with an upper mold and a lower mold and vulcanized to obtain the ring-shaped precured tread member B. At that time, plural grooves extending to the longitudinal direction of the ring-shaped outer surface of the precured tread member B are formed.

As for the vulcanization condition, it is preferable to perform the vulcanization at from about 100 to 185°C for a time until completion of vulcanization of the precured tread member B.

As for the rubber composition of the precured tread member (tread portion forming member), in addition to a rubber component, a variety of vulcanization accelerating components, and a crosslinking component, all of which are used for a usual rubber composition, if desired, chemicals which are generally used in the rubber industry, for example, carbon black as a reinforcing filler, a softener (oil), an anti-aging agent, a crosslinking agent such as sulfur, etc., can be properly compounded. Incidentally, as the rubber component, a natural rubber (NR) or a synthetic rubber can be used solely, or a blend of these rubbers can be used. Examples of the synthetic rubber include a synthetic polyisoprene rubber, a polybutadiene rubber (BR), a styrene butadiene rubber (SBR), a butyl rubber, a halogenated butyl rubber. It is preferable to use a tread rubber composition (in particular, a tread base rubber composition) as the rubber composition.

<Manufacturing method of tire>

Next, the tire 1 can be suitably manufactured by carrying the tire casing A having the precured tread member B stuck thereonto via an unvulcanized cushion rubber layer into a non-illustrated vulcanization apparatus (for example, a vulcanizer) and vulcanizing the unvulcanized cushion rubber layer. At that time, the precured tread member B is subjected to co-vulcanization bonding to the outer periphery of the crown portion of the tire casing A.

As for the vulcanization condition, it is preferable to perform the vulcanization at from about 60 to 140°C.

At this time of vulcanization, it is preferable that an arrival temperature of the most delayed point of vulcanization of the innermost belt layer 5a at the time of integrally vulcanizing the tire casing A and the precured tread member B by bonding is lower than an arrival temperature of the most delayed point of vulcanization of the innermost belt layer 5a at the time of vulcanizing the unvulcanized tire casing. This is because optimization is made such that a total degree of vulcanization of a degree of vulcanization of the vulcanization of the unvulcanized tire casing and a degree of vulcanization of the vulcanization of the tire casing A and the precured tread member B does not become excessive, and initial adhesion to a steel cord, low heat generation properties, and durability of the coating rubber composition of the innermost belt layer 5a are enhanced.

EXAMPLES

The present invention is hereunder described in more detail by reference to the following Examples, but it should be construed that the present invention is not limited to these Examples at all.

Incidentally, low rolling resistance and crack resistance after long-term use were evaluated in the following methods.

<Low rolling resistance>

A rolling resistance coefficient (RRC) of each of prototype tires was calculated according to JIS D4234 (truck and bus tires).

Incidentally, in calculating the rolling resistance coefficient, a rolling resistance value calculated by the coastdown method was used. In addition, in calculating a rolling resistance coefficient regarding a tire casing after eliminating a tread rubber from a tire, a measuring condition was set up on the basis of a size of a tire before eliminating the tread rubber.

<Crack resistance after long-term use>

A crack of 0.5 mm was put in a central portion of a JIS No. 3 test piece after long-term heat aging, fatigue with a strain of from 50 to 100 % was repeatedly given at room temperature, and the number of times until the sample was broken was measured. Values at the respective strains were determined, and an average value thereof was used. In Table 2, the crack resistance was expressed with an index according to the following equation while defining Comparative Example 1 as 100. It is meant that the larger the index value, the more favorable the crack resistance is.

$$
\text{(Crack resistance index after long-term use)} = \{\text{(number of times until the test sample is broken)}/\text{(number of times until the sample of Comparative Example 1 or Example 7 is broken)}\} \times 100
$$

Examples 1 to 3

<Fabrication of tire>

A belt wedge rubber composition, a base tread rubber composition, a tread rubber composition, and a side rubber composition were manufactured in the usual way according to the compound formulations shown in Table 1.

Subsequently, a tire having a tire size of 11R22.5 was manufactured. First of all, a plurality of unvulcanized tire casings (Examples 1 to 3) were manufactured using Compound A as the belt wedge rubber composition and Compound C as the base tread rubber, each of which is described in Table 2, and also using a material shown in Table 1 as the side rubber composition. Each of these unvulcanized tire casings was vulcanized while not only surrounding from the outside by a vulcanizing mold tool but also heating under pressure (pressurizing with a high-pressure water vapor at 150°C) from the inside by a vulcanizing bladder, thereby manufacturing a tire casing. At that time, a first heating unit of the vulcanizing mold tool block corresponding to the bead portion side of the unvulcanized tire casing was kept at 170°C, and a second heating unit of the vulcanizing mold tool block corresponding to the belt portion side of the unvulcanized tire casing was kept at 140°C. According to this, an amount of heat per unit volume to be given to the belt portion side by the second heating unit was made smaller than an amount of heat per unit volume to be given to the bead portion side by the first heating unit. A vulcanizing temperature at which a most delayed point of vulcanization of the innermost belt layer arrived was 150°C, and a vulcanizing temperature at which a most delayed point of vulcanization of the bead portion arrived was 155°C. A vulcanizing time was 30 minutes in all of the cases.

In addition, separately, the tread rubber composition was previously marked with a tread pattern and then subjected to vulcanization molding by heating at 160°C, thereby manufacturing a precured tread member.

Each of bonding surfaces of these tire casing and precured tread member was buffed by a buff machine.

Subsequently, a cushion rubber for bonding the tire casing and the precured tread member to each other was manufactured in a compound described in Table 1. An unvulcanized cushion rubber sheet was stuck to the tire casing, and subsequently, each precured tread member was stuck to each tire casing, followed by vulcanization at 120°C for 2 hours by a vulcanizing apparatus (vulcanizer). There was thus obtained a tire in which the tire casing and the precured tread member were bonded to each other. At that time, a vulcanizing temperature at which the most delayed point of vulcanization of the innermost belt layer arrived was 120°C.

<Fabrication of tire casing>

In addition, in each of the obtained three tires, the tread portion was removed at the boundary between a portion in which the tire casing was located and a portion in which the precured tread member was located, thereby obtaining a tire casing. At that time, the removal of the tread portion was performed by a buff machine.

<Fabrication of test piece of crack resistance>

The belt wedge rubber composition of Compound A shown in Table 1 was vulcanized so as to reproduce a belt wedge rubber temperature (both temperatures of two stages) at the time of tire vulcanization, thereby obtaining a test piece for measuring crack resistance after long-term use (JIS No. 3 test piece) . The belt wedge rubber temperature at the time of tire vulcanization was reproduced by a vulcanizing method of a tire having a tire size of 11R22.5 as described below, in which a thermocouple was embedded in the belt wedge rubber layer, and a result obtained by measuring a change in temperature relative to the vulcanizing time was given feedback to the vulcanizing temperature of the test piece.

The JIS No. 3 test piece enclosed in a container in a nitrogen atmosphere was allowed to stand in a gear oven at 100°C for 24 hours, thereby obtaining a JIS No. 3 test piece after long-term heat aging.

<Evaluation>

The obtained tire (tire size: 11R22.5) and tire casing after removing the tread portion were used and evaluated for the low rolling resistance according to the above-described method. In addition, the obtained JIS No. 3 test piece after long-term heat aging was used and evaluated for the crack resistance after long-term heat aging according to the above-described method. The evaluation results are shown in Table 2.

Comparative Examples 1 to 3

<Fabrication of tire and tire casing>

A tire having a tire size of 11R22.5 was manufactured. First of all, a plurality of unvulcanized tire casings were manufactured using Compound B as a belt wedge rubber composition and Compound D as a base tread rubber composition and also using materials shown in Table 1 as a tread rubber composition and a side rubber composition. A precured tread member manufactured in the same manner as that in Example 1 was stuck onto the outside of the tire radial direction thereof, thereby obtaining a green tire. The green tire was vulcanized by means of usual one-stage vulcanization (temperatures of first and second heating units: 145°C, vulcanizing time: 30 minutes), thereby manufacturing a tire.

In addition, tire casings (Comparative Examples 1 to 3) were manufactured in the same manner as that in Examples 1 to 3.

<Fabrication of test piece of crack resistance>

Furthermore, the belt wedge rubber composition of Compound B shown in Table 1 was vulcanized so as to reproduce a belt wedge rubber temperature (one-stage temperature) at the time of tire vulcanization, thereby obtaining a test piece for measuring crack resistance after long-term use (JIS No. 3 test piece). The belt wedge rubber temperature at the time of tire vulcanization was reproduced by a vulcanizing method of a tire having a tire size of 11R22.5 as described below, in which a thermocouple was embedded in the belt wedge rubber layer, and a result obtained by measuring a change in temperature relative to the vulcanizing time was given feedback to the vulcanizing temperature of the test piece. The JIS No. 3 test piece enclosed in a container in a nitrogen atmosphere was allowed to stand in a gear oven at 100°C for 24 hours, thereby obtaining a JIS No. 3 test piece after long-term heat aging.

<Evaluation>

The obtained tire (tire size: 11R22.5) and tire casing after removing the tread portion were used and evaluated for the low rolling resistance according to the above-described method. In addition, the obtained JIS No. 3 test piece after long-term heat aging was used and evaluated for the crack resistance after long-term deterioration according to the above-described method. The evaluation results are shown in Table 2.

[Table 1]

Table 1

| Compound | Wedge rubber composition (parts by mass) | | Base tread rubber composition (parts by mass) | | Cushion rubber (parts by mass) | Tread rubber composition (parts by mass) | Side rubber composition (parts by mass) |
|---|---|---|---|---|---|---|---|
| | A | B | C | D | | | |
| Natural rubber | 100 | 100 | 70 | 70 | 100 | 70 | 50 |
| Butadiene rubber | - | - | 30 | 30 | - | 30 | 50 |
| Carbon black (HAF) [1*] | - | 60 | - | 35 | 35 | - | 50 |
| Carbon black (FEF) [2*] | 45 | - | 35 | - | - | - | - |
| Carbon black (N234) [3*] | - | - | - | - | - | 47 | - |
| Silica [4*] | 5 | 5 | - | - | - | - | - |
| Spindle oil | - | - | - | - | 10 | - | - |
| Naphthenic oil [5*] | - | - | - | - | - | - | 3 |
| Anti-aging agent [6*] | 2 | 2 | 2 | 2 | 2 | 2 | 2 |
| Organic acid cobalt salt [7*] | 0.3 | 0.3 | - | - | - | - | - |
| Zinc oxide | 8 | 8 | 3 | 3 | 5 | - | 3 |
| Stearic acid | 2 | 2 | 2 | 2 | 3 | 2 | 2 |
| Vulcanization accelerator [8*] | - | - | - | - | - | 1.2 | 1 |
| Vulcanization accelerator DZ | 1 | 1 | 0.8 | 0.8 | - | - | - |
| Vulcanization accelerator TBzTD | - | - | - | - | 0.2 | - | - |
| NS [9*] | - | - | - | - | 0.8 | - | - |
| M [10*] | - | - | - | - | 0.5 | - | - |

(continued)

| | Wedge rubber composition (parts by mass) | | Base tread rubber composition (parts by mass) | | Cushion rubber (parts by mass) | Tread rubber composition (parts by mass) | Side rubber composition (parts by mass) |
|---|---|---|---|---|---|---|---|
| Compound | A | B | C | D | | | |
| Sulfur | 5 | 5 | 2 | 2 | 3 | 1.2 | 1 |

1∗ HAF (N-330) : Trade name "ASAHI #70", manufactured by Asahi Carbon Co., Ltd. (nitrogen adsorption specific surface area: 77 $m^2$/g)

2* FEF (N-550) : Trade name "ASAHI #60", manufactured by Asahi Carbon Co., Ltd. (nitrogen adsorption specific surface area: 40 $m^2$/g)

3*: Trade name "SEAST 7HM", manufactured by Tokai Carbon Co., Ltd. (nitrogen adsorption specific surface area: 126 $m^2$/g)

4*: Trade name "NIPSIL AQ", manufactured by Tosoh Silica Corporation (BET specific surface area: 220 $m^2$/g)

5*: Trade name "A/O MIX", manufactured by Sankyo Yuka Kogyo K.K.

6*: Trade name "NOCRAC 6C", manufactured by Ouchi Shinko Chemical Industrial Co., Ltd. for N-(1,3-dimethylbutyl)-N'-phenyl-p-phenylenediamine 7*: Trade name "MANOBOND C225" (registered trademark), manufactured by OM Group Inc., etc. (cobalt content: 22.5 %) 8*: Trade name "NOCCELER CZ-G", manufactured by Ouchi Shinko Chemical Industrial Co., Ltd. for N-cyclohexyl-2-benzothiazolylsulfenamide 9*: N-Tert-butyl-2-benzothiazolylsulfenamide 10*: 2-Mercpatobenzothiazole

[Table 2]

Table 2

| | Example 1 | Example 2 | Example 3 | Comparative Example 1 | Comparative Example 2 | Comparative Example 3 |
|---|---|---|---|---|---|---|
| Wedge rubber composition | A | A | A | B | B | B |
| Base tread rubber composition | C | C | C | D | D | D |
| RRC of tire casing | 3.6 | 3.7 | 3.8 | 4.2 | 4.3 | 4.4 |
| (RRC of tire casing)/ (RRC of tire) | 0.78 | 0.79 | 0.79 | 0.81 | 0.81 | 0.81 |
| RRC of tire | 4.6 | 4.7 | 4.8 | 5.2 | 5.3 | 5.4 |
| RRC (INDEX) of tire | 88 | 90 | 92 | 100 | 102 | 104 |
| Crack resistance after long-term heat aging | 105 | 105 | 105 | 100 | 100 | 100 |

As is clear from Table 2, the tires of Examples 1 to 3 having a rolling resistance index of tire casing of smaller than 4.0 exhibited excellent low rolling properties as a tire as compared with the tires of Comparative Examples 1 to 3. In addition, the tires of Examples 1 to 3 were excellent in terms of durability as compared with the tires of Comparative Examples 1 to 3.

INDUSTRIAL APPLICABILITY

According to the tire of the present invention, a tire which is enhanced in terms of low rolling resistance and durability is obtained. Therefore, the tire of the present invention is suitably used as a variety of pneumatic tires, in particular, pneumatic radial tires for light trucks and large-sized vehicles (for trucks and buses, construction vehicles, etc.), etc.

REFERENCE SIGNS LIST

| | |
|---|---|
| 1: | Tire |
| 2, 2': | Bead core |
| 3, 3': | Stiffener |
| 4: | Carcass ply |
| 5: | Belt portion |
| 5a to 5d: | Belt layer |
| 6, 6': | Belt undercushion rubber |
| 7: | Tread rubber |
| 8, 8': | Side rubber |
| M: | Side portion |
| N: | Bead portion |
| A: | Tire casing |
| B: | Precured tread member |

**Claims**

1. A tire (1) comprising a tire casing (A) having a rolling resistance coefficient according to the coastdown method of JIS D4234 of not exceeding 4.0, wherein the tire casing comprises a base tread and a belt wedge rubber, wherein the base tread is constituted by a rubber composition which comprises a rubber component comprising a natural rubber in an amount of 60 % by mass or more, carbon black having a nitrogen adsorption specific surface area as defined in JIS K6217-2:2001 of from 35 to 45 $m^2/g$ in an amount of from 25 to 45 parts by mass based on 100 parts by mass of the rubber component and sulfur in an amount of from 1.0 to 7.0 parts by mass based on 100 parts by mass of the rubber component, wherein the belt wedge rubber is constituted by a rubber composition which comprises a rubber component comprising a natural rubber in an amount of 60 % by mass or more, carbon black having a nitrogen adsorption specific surface area as defined in JIS K6217-2:2001 of from 38 to 99 $m^2/g$ in an amount of from 40 to 60 parts by mass based on 100 parts by mass of the rubber component, silica having a BET specific surface area (measured in conformity with ISO 5794/1) of from 40 to 350 $m^2/g$ in an amount of not more than 10 parts by mass based on 100 parts by mass of the rubber component, an organic acid cobalt salt in an amount of not more than 0.3 parts by mass in terms of a cobalt amount based on 100 parts by mass of the rubber component, and sulfur in an amount of from 3.0 to 7.0 parts by mass based on 100 parts by mass of the rubber component.

2. The tire according to claim 1, wherein a ratio of rolling resistance of the tire casing to rolling resistance of the tire according to the coastdown method of JIS D4234 is satisfied with a relation of:

```
(rolling resistance of tire casing)/(rolling resistance of tire) ≤ 0.80.
```

3. The tire according to claim 1 or 2, wherein a tread portion forming member is stuck to a tire casing formed separately from a tread portion, and these tire casing and tread portion forming member are stuck to each other.

4. The tire according to claim 3, wherein the tire casing formed separately from a tread portion is one obtained by vulcanization molding such that in an unvulcanized tire casing, an amount of heat per unit volume to be given to the belt portion (5) side is smaller than an amount of heat per unit volume to be given to the bead portion (N) side.

5. The tire according to any one of claims 1 to 4, wherein the tire is a tire having a tire casing including a bead core (2, 2'), a carcass ply (4), a belt layer (5a to 5d), and a side rubber (8, 8'); and a tread portion.

6. The tire according to any one of claims 1 to 5, which is a heavy duty tire.

**Patentansprüche**

1. Reifen (1), umfassend eine Reifenkarkasse (A), welche einen Rollwiderstandsbeiwert, gemessen mit dem Coastdown-Verfahren nach JIS D4234 kleiner gleich 4,0 aufweist, wobei die Reifenkarkasse eine Basislauffläche und ein Gürtelkeilgummi umfasst,
wobei die Basislauffläche aus einer Gummizusammensetzung besteht, welche eine Gummikomponente, umfassend Naturgummi in einer Menge von 60 Masse-% oder mehr, Ruß mit einer spezifischen Stickstoffadsorptionsoberfläche nach JIS K6217-2:2001 zwischen 35 und 45 m$^2$/g in einer Menge von zwischen 25 und 45 Massenteilen, bezogen auf 100 Massenteile der Gummikomponente und Schwefel in einer Menge von 1,0 bis 7,0 Massenteilen, bezogen auf 100 Massenteile der Gummikomponente, umfasst,
wobei das Gürtelkeilgummi aus einer Gummizusammensetzung besteht, welche eine Gummikomponente, umfassend Naturgummi in einer Menge von 60 Masse-% oder mehr, Ruß mit einer spezifischen Stickstoffadsorptionsoberfläche nach JIS K6217-2:2001 zwischen 38 und 99 m$^2$/g in einer Menge von zwischen 40 und 60 Massenteilen, bezogen auf 100 Massenteile der Gummikomponente, Kieselsäure mit einer BET-spezifischen Oberfläche (gemessen nach ISO 5794/1) zwischen 40 und 350 m$^2$/g in einer Menge von nicht mehr als 10 Massenteilen, bezogen auf 100 Massenteile der Gummikomponente, Kobaltsalz einer organischen Säure in einer Menge von nicht mehr als 0,3 Massenteilen ausgedrückt in einer Menge von Kobalt, bezogen auf 100 Massenteile der Gummikomponente, und Schwefel in einer Menge von 3,0 bis 7,0 Massenteilen, bezogen auf 100 Massenteile der Gummikomponente, umfasst.

2. Reifen nach Anspruch 1, wobei das Verhältnis zwischen dem Rollwiderstand der Reifenkarkasse und dem Rollwiderstand des Reifens, gemessen mit dem Coastdown-Verfahren nach JIS D4234, folgende Ungleichung erfüllt:

$$\text{(Rollwiderstand der Reifenkarkasse)}/\text{(Rollwiderstand des Reifens)} \leq 0,80.$$

3. Reifen nach Anspruch 1 oder 2, wobei ein den Laufflächenabschnitt bildendes Element an einer Reifenkarkasse festgeklebt ist, welche von einem Laufflächenabschnitt getrennt geformt wird, und diese Reifenkarkasse und dieses den Laufflächenabschnitt bildendes Element zusammengeklebt werden.

4. Reifen nach Anspruch 3, wobei die Reifenkarkasse, welche von einem Laufflächenabschnitt getrennt geformt wird, durch Vulkanisationsformen gebildet wird, sodass in einer nicht vulkanisierten Reifenkarkasse die Wärmemenge pro Volumeneinheit, welche der Gürtelabschnittseite (5) zugeführt werden muss kleiner als die Wärmemenge pro Volumeneinheit ist, welche der Wulstabschnittseite (N) zugeführt werden muss.

5. Reifen nach einem der Ansprüche 1 bis 4, wobei der Reifen eine Reifenkarkasse aufweist, welche einen Wulstkern (2, 2'), eine Karkassenlage (4), eine Gürtelschicht (5a bis 5d) und ein Seitengummi (8, 8'); und einen Laufflächenabschnitt umfasst.

6. Reifen nach einem der Ansprüche 1 bis 5, welcher ein Schwerlastreifen ist.

**Revendications**

1. Bandage pneumatique (1), comprenant une carcasse de bandage pneumatique (A) présentant un coefficient de résistance au roulement selon le procédé de la décélération en roue libre selon la norme JIS D4234 non supérieur à 4,0, dans lequel la carcasse du bandage pneumatique comprend une bande de roulement de base et une gomme de coin de ceinture ;
dans lequel la bande de roulement de base est constituée par une composition de caoutchouc comprenant un composant de caoutchouc comprenant un caoutchouc naturel dans une quantité représentant 60% en poids ou plus, du noir de carbone, comportant une aire de surface spécifique à absorption d'azote comme définie dans la norme JIS K6217-2 :2001 comprise entre 35 et 45 m$^2$/g, dans une quantité représentant 25 à 45 parties en poids sur la base de 100 parties en poids du composant de caoutchouc, et du soufre dans une quantité représentant 1,0 à 7,0 parties en poids, sur la base de 100 parties en poids du composant de caoutchouc ;

dans lequel la gomme de coin de ceinture est constituée par une composition de caoutchouc comprenant un composant de caoutchouc comprenant un caoutchouc naturel dans une quantité représentant 60% en poids ou plus, du noir de carbone comportant une aire de surface spécifique à absorption d'azote comme définie dans la norme JIS K6217-2 :2001 comprise entre 38 et 99 m$^2$/g, dans une quantité représentant 40 à 60 parties en poids, sur la base de 100 parties en poids du composant de caoutchouc, de la silice comportant une aire de surface spécifique BET (mesurée conformément à la norme ISO 5794/1) comprise entre 40 et 350 m$^2$/g, dans une quantité non supérieure à 10 parties en poids, sur la base de 100 parties en poids du composant de caoutchouc, un sel de cobalt d'acide organique dans une quantité non supérieure à 0,3 partie en poids en termes d'une quantité de cobalt, sur la base de 100 parties en poids du composant de caoutchouc, et du soufre dans une quantité représentant 3,0 à 7,0 parties en poids, sur la base de 100 parties en poids du composant de caoutchouc.

2. Bandage pneumatique selon la revendication 1, dans lequel le rapport entre la résistance au roulement de la carcasse du bandage pneumatique et la résistance au roulement du bandage pneumatique, selon le procédé de la décélération en roue libre selon la norme JIS D4234 est satisfait par une relation de :

(résistance au roulement de la carcasse du bandage pneumatique) / (résistance au roulement du bandage pneumatique $\leq$ 0,80.

3. Bandage pneumatique selon les revendications 1 ou 2, dans lequel un élément de formation de la bande de roulement est collé sur une carcasse du bandage pneumatique formée séparément d'une partie de bande de roulement, cette carcasse du bandage pneumatique et l'élément de formation de la bande de roulement étant collés l'un sur l'autre.

4. Bandage pneumatique selon la revendication 3, dans lequel la carcasse du bandage pneumatique formée séparément d'une partie de bande de roulement est produite par moulage par vulcanisation, de sorte que dans une carcasse du bandage pneumatique non vulcanisée, une quantité de chaleur par unité de volume devant être appliquée au côté de la partie de ceinture (5) est inférieure à une quantité de chaleur par unité de volume devant être appliquée au côté de la partie de talon (N).

5. Bandage pneumatique selon l'une quelconque des revendications 1 à 4, dans lequel le bandage pneumatique et un bandage pneumatique comportant une carcasse de bandage pneumatique englobant une tringle (2, 2'), une nappe de carcasse (4), une couche de ceinture (5a à 5d) et une gomme de flanc (8, 8') ; ainsi qu'une partie de bande de roulement.

6. Bandage pneumatique selon l'une quelconque des revendications 1 à 5, constitué par un bandage pneumatique pour poids lourds.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010122396 A
- WO 2010041528 A
- JP 2006117099 A
- JP 2007276581 A